Europäisches Patentamt

European Patent Office

Office européen des brevets

(19)

(11) Publication number: **0 157 231 B1**

(12) **EUROPEAN PATENT SPECIFICATION**

(45) Date of publication of patent specification: **11.01.89**

(51) Int. Cl.⁴: **C 23 C 4/10,** C 23 C 4/06

(21) Application number: **85102748.2**

(22) Date of filing: **11.03.85**

(54) **Aluminum and yttrium oxide coated thermal spray powder.**

(30) Priority: **05.04.84 US 597139**

(43) Date of publication of application:
**09.10.85 Bulletin 85/41**

(45) Publication of the grant of the patent:
**11.01.89 Bulletin 89/02**

(84) Designated Contracting States:
**DE FR GB IT**

(56) References cited:
**GB-A-1 591 593**
**US-A-4 181 525**
**US-A-4 276 353**

(73) Proprietor: **THE PERKIN-ELMER CORPORATION**
**761 Main Avenue**
**Norwalk Connecticut 06859-0074 (US)**

(72) Inventor: **Rangaswamy, Subramaniam**
**488 Bicycle Path**
**Port Jefferson New York 11776 (US)**
Inventor: **Harrington, John H.**
**Box 355**
**Warwick New York 10990 (US)**

(74) Representative: **Patentanwälte Grünecker,**
**Kinkeldey, Stockmair & Partner**
**Maximilianstrasse 58**
**D-8000 München 22 (DE)**

EP 0 157 231 B1

# EP 0 157 231 B1

**Description**

This invention relates to a thermal spray composite for producing tenacious and corrosion resistant coatings and to a process for thermal spraying such coatings.

Thermal spraying, also known as flame spraying, involves the heat softening of a heat fusible material such as metal or ceramic, and propelling the softened material in particulate form against a surface which is to be coated. The heated particles strike the surface and bond thereto. A conventional thermal spray gun is used for the purpose of both heating and propelling the particles. In one type of thermal spray gun, the heat fusible material is supplied to the gun in powder form. Such powders are typically comprised of small particles, e.g., between 149 µm (100 mesh U.S. standard screen size) and about 5 µm.

A thermal spray gun normally utilizes a combustion or plasma flame to produce the heat for melting of the powder particles. It is recognized by those of skill in the art, however, that other heating means may be used as well, such as electric arcs, resistance heaters or induction heaters, and these may be used alone or in combination with other forms of heaters. In a powder-type combustion thermal spray gun, the carrier gas, which entrains and transports the powder, can be one of the combustion gases or an inert gas such as nitrogen, or it can be simply compressed air. In a plasma spray gun, the primary plasma gas is generally nitrogen or argon. Hydrogen or helium is usually added to the primary gas. The carrier gas is generally the same as the primary plasma gas, although other gases, such as hydrocarbons, may be used in certain situations.

The material alternatively may be fed into a heating zone in the form of a rod or wire. In the wire type thermal spray gun, the rod or wire of the material to be sprayed is fed into the heating zone formed by a flame of some type, where it is melted or at least heat-softened and atomized, usually by blast gas, and thence propelled in finely divided form onto the surface to be coated. The rod or wire may be conventionally formed as by drawing, or may be formed by sintering together a powder, or by bonding together the powder by means of an organic binder or other suitable binder which disintegrates in the heat of the heating zone, thereby releasing the powder to be sprayed in finely divided form. In other forms the wire may have a coating sheath of one component and a core of the others, or may be made by twisting strands of the components.

Coatings produced by thermal spraying alloys of nickel, iron, cobalt or combinations thereof as a base metal which contain, in the alloy, chromium and optionally aluminum and/or other elements are used to provide corrosion protection of metal components such as in gas turbine engines and boiler systems. Cobalt, for example, is used as either a base metal or an alloying element to improve high temperature creep and strength properties in cast and wrought superalloys. However, it is well known that cobalt is not classified as an oxidation resistant metal. Scaling and oxidation rates of unalloyed cobalt in air are many times those of nickel. The scaling and oxidation resistance of cobalt-base alloys at high temperature is largely a function of chromium content. As a result, cast or wrought parts fabricated of cobalt alloys frequently require special coatings for protection.

However, in the thermal spraying of such nickel, iron or cobalt alloys, the bond strength, bend ductility and thickness limits of the resultant coatings are often not satisfactory, even where the coatings are thermal sprayed using a plasma spray gun. Also, to obtain resistance to the corrosive conditions in the application, an alloying element such as yttrium or a rare earth metal is often added, but thermal spray powders or wires of such alloys are expensive to manufacture. Typical alloys of this type are disclosed, for example, in US—A—4,313,760, and in GB—A—2,028,378.

To achieve high density and improved bonding, alloy powders are plasma sprayed in a low pressure inert atmosphere chamber, an operation that is slow and costly and requires sophisticated vacuum and work handling equipment. There are similar and even more complex problems with vapor deposition which is an alternative coating method known in the field. Chambers also preclude deposition onto large components such as boilers.

Coatings having improved bond strength may be thermal sprayed using a composite powder formed of metals capable of reacting exothermically as described in US—A—3,322,515. One such powder has a nickel core with about 5 percent by weight of fine particles of aluminum bonded to the surface thereof with an organic binder. The core may be alloyed with another metal such as chromium. Cobalt plus aluminum and molybdenum plus aluminum are others of many exothermic pairs mentioned therein.

Several other patents teach improved clad powders to produce thermal sprayed coatings having good bond strength and the capability of being readily machined. One is US—A—3,841,901 which discloses a powder of nickel, copper or iron core coated with fine particles of aluminum and molybdenum for producing a thermal sprayed coating which has good bond strength and can readily be machined. Similarly US—A—4,181,525 teaches a thermal spray powder comprising particles having a core of nickel, iron, copper, cobalt or alloys thereof coated with a binder containing discreet particles of aluminum and substantially pure nickel, directed to coatings having improved machinability.

The composite powders disclosed in the above-mentioned patents are generally employed for bonding other coating materials to substrates such as steel, or for producing single step coatings for machine element applications requiring wear resistance and finishing capability. However, there has been only limited success with composite powders where corrosion resistance is required. The reasons are not well understood. In aqueous or moist environments, electrolytic problems appear to be associated with the

2

heterogeneous nature of the coatings resulting from incomplete alloying of the cladding elements with the core during the thermal spraying process. However, protection is also lacking in dry, high temperature situations that are oxidizing or that involve sulfates and chlorides in either oxidizing or reducing conditions. If coatings contain any free nickel, as results from incomplete reaction or alloying during thermal sprayings the nickel-aluminum clad powder of US—A—4,181,525, even where the powder has a nickel chromium alloy core, the coatings are especially vulnerable to attack in certain corrosive conditions. The attack is not only in the coating material but in the interface, weakening the bond and causing coatings to spall.

Chromium is used as an alloying element in a powder core to improve corrosion resistance of coatings of a thermal spray powder in which the core is clad with aluminum. However, the chromium as a core or as an addition has proven to reduce the bond strength of the thermal sprayed coating. For example, aluminum clad chromium or nickel-chromium alloy provides lower bond strength than aluminum clad nickel.

As taught in US—A—3,322,515, for bonding purposes, iron is not of itself a satisfactory component in a composite with aluminum, and iron chromium alloy clad only with aluminum has especially poor bonding when thermal sprayed.

Thus, although composite thermal spray powders are known and available which may produce satisfactory bond strength, high tenacity is desired for the corrosive environments, and the coatings produced from such powders are particularly lacking in sufficient corrosion resistance. On the other hand, the known alloy powders used for thermal spraying coatings for high temperature corrosion protection lack sufficient bond strength.

US—A—3,655,425 discloses a thermal spray powder having core particles of a metal coated with fine discrete particles of a ceramic such as to leave exposed a portion of the surface area of the metal core. The discrete particles may additionally include another ceramic or a metal such as aluminum. In teaching the exposure of core surface, the patent is particularly directed to the problem of carrying into the coating ceramic particles that are difficult or impossible to melt in the thermal spray process. A preferred example of ceramic in the above-mentioned patent is boron nitride to produce abradable coatings. Yttrium oxide is not mentioned therein as an example of a ceramic for cladding the core particles, nor is there any teaching or suggestion that inclusion of any other oxide with aluminum in composite materials may enhance the bond strength and corrosion resistance of the thermal sprayed coatings.

US—A—3,864,093 teaches a coated article, the coated layer having at least 2 percent by volume of metal oxide particles dispensed in a metal alloy matrix. Fourteen metal oxides plus spinel combinations thereof are given for the metal oxide particles, yttrium oxide being one of the 14 oxides listed. The metal alloy matrix may be an alloy of iron, cobalt or nickel with one or more of aluminum, silicon and chromium. The coatings are produced by plasma or detonation spraying of blends of the constituent particles of metal oxide and metal alloy, and are characterized by a high hardness of at least 500 VHN (with 300 g load) which is equivalent to Rc 49. As taught in the patent, the metal oxide particles increase wear resistance of the coating without degrading the normal oxidation resistance of the alloy matrix. There is no indication that the oxide inclusions may increase the oxidation and hot corrosion resistance or the bonding. In fact, it is generally known in the art that thermal sprayed oxides bond poorly in comparison to metals.

GB—A—1,591,593 describes a flame spray powder consisting of at least one of the metal elements iron, cobalt or nickel and additionally aluminum which constituents have been subjected to repeated application of compressive forces sufficient to bond the particles of the constituents to one another. To these bonded constituents, yttrium oxide may be added as a hard phase of dispersoid. According to one example, this flame spray powder may have the following ingredients:

chromium 10 to 30 weight percent, aluminum 0 to 20 weight percent, yttrium oxide 0.1 to 5.0 weight percent and the balance iron/cobalt or nickel.

In view of the foregoing, it is the object of the present invention to provide a novel thermal spray composite for producing tenacious metallic coatings characterized by both high bond strength and hot corrosion resistance.

A further object of this invention is to provide an improved thermal spray process for producing tenacious metallic coating characterized by both high bond strength and hot corrosion resistance.

The foregoing and other objects of the present invention are achieved by a thermal spray composite for producing tenacious and corrosion resistant coatings, characterized by alloy base constituent particles having particles of additional constituents adhering thereto, wherein its alloy base constituent comprises at least one base metal selected from nickel, iron, cobalt and chromium as the alloy balance and further additional optional alloying elements, and wherein its additional constituents comprise aluminum (metal) and yttrium oxide, the additional constituent aluminum being present in amount of about 1 to 15 percent by weight and the additional constituent yttrium oxide being present in an amount of about 0.5 to 10 percent by weight of the total of the base constituent and the additional constituents.

There is also provided a process for producing a tenacious and corrosion resistant coating comprising thermal spraying a thermal spray composite of alloy base constituent particles having additional constituent particles adhered thereto, wherein its alloy base constituent comprises at least one base metal selected from nickel, iron, cobalt and chromium as the alloy balance and further additional optional alloying elements, and wherein its additional constituents comprise aluminum (metal) and yttrium oxide, the additional constituent aluminum being present in amount of about 1 to 15 percent by weight and the

3

additional constituent yttrium oxide being present in an amount of about 0.5 to 10 percent by weight of the total of the base constituent and the additional constituents.

According to the present invention, a metallic composite material has been developed for thermal spraying onto metallic substrates by conventional thermal spray equipment. The coatings produced thereby are very tenacious, having especially high bond strength and ductility. The coatings additionally have a high degree of high temperature corrosion resistance compared to prior art thermal sprayed coatings.

The thermal spray composite comprises a base constituent that may itself be a composite but is preferably an alloy of at least one of the metals, nickel, iron, cobalt and chromium. The base constituent may additionally contain aluminum. The chromium, if present, is preferably in an amount of about 1 to 55 percent by weight of the alloy. The aluminum, if present in the base constituent, should be in an amount of about 1 to 60 percent by weight of the base constituent. In one desirable embodiment the aluminum is in the base constituent in an amount of about 20 to 55 percent, and the resulting coating formed from the composite of the present invention has the additional advantage of improved ductility over the highly brittle coatings of flame sprayed alloy high in aluminum content. If chromium and aluminum are both present in the base constituent, preferably they should total about 1 to 55 percent by weight of the base constituent. Nickel-chromium alloy, iron-chromium alloy and iron-aluminum alloy have each been found to be particularly advantageous as the base constituent, depending on the environmental exposure to which the resulting coating is subjected.

In accordance with the invention, the additional constituents aluminum, yttrium oxide and, optionally, molybdenum and/or cobalt are each additionally present in the thermal spray composite but are not alloyed with each other or which the base constituent prior to use in the thermal spray process. The additional constituent aluminum should be present in an amount of about 1 to 15 percent and the yttrium oxide from about 0.5 percent and preferably about 1 to 10 percent by weight of the total of the base constituent and the additional constituents. The molybdenum and/or cobalt, if either is present as a third or fourth additional constituent, may each be present in an amount of about 1 to 10 percent by weight of the total of the alloy and the additional constituents.

The base constituent may contain not only nickel, iron, cobalt, chromium or combinations of these, and aluminum, as set forth, but may additionally contain some amounts of other metallic elements such as yttrium or rare earth metals, and also may contain zirconium, hafnium, titanium refractory metals or metalloids such as silicon, carbon and boron. For example, the base constituent alloy may be of the types disclosed in the previously referenced US—A—4,313,760 and GB—A2 028 378.

Preferably, however, the base constituent alloy is a common, simple alloy such as nickel with 20 weight percent chromium, nickel with 16 weight percent chromium and 8 weight percent iron, iron with 30 weight percent chromium, or iron with 50 weight percent aluminum.

The additional constituents aluminum, yttrium oxide and, optionally, molybdenum and/or cobalt may each contain small amounts of alloying elements, but preferably each is in substantially pure form; for example, they should contain less than 5 and preferably less than about 2 percent impurities.

The term "composite" as used herein is intended to designate a structurally integral unit and does not include a mere mixture of constituents which may be physically separated without any destruction of the structure. Thus, in the case of powder, the term "composite" does not include a simple mixture of individual granules of the separate base constituent and the additional constituents aluminum, yttrium oxide and, optionally, molybdenum and/or cobalt, but requires that each of the individual composite granules contain the separate constituents.

Preferably the composite is in the form of a powder. More preferably, the base constituent is in the form of a core particle, and the additional constituents are in the form of fine particles such as −10 μm size, desirably secured to the core particle with a binder, preferably an organic binder. A thermal spray powder of the present invention should have a size generally in the range of about −149 μm (−100 mesh U.S. Standard Mesh Size) to +5 μm, preferably about 44 to 121 μm (−120 to +325 mesh). In the more preferable form of powder, the starting core size is equal to, or about one or two screen sizes smaller than the desired size of the final powder, for example, −121 μm or −111 μm or −88 μm (−120 or −140 or −170 mesh) size core where the final powder is to be 44 to 121 μm (−120 to +325 mesh). Thus one embodiment contemplated is, for example, a 44 to 121 μm (−120 to +325 mesh) thermal spray powder having a core of nickel, iron or cobalt alloyed with chromium or aluminum, and additional particles of −10 μm aluminum, yttrium oxide and molybdenum and/or cobalt secured to the core with a binder.

The binder material may be any known or conventional binding material which may be used for forming a coating or binding particles together or to a surface. The binder is preferably organic and may be a varnish containing a resin as the varnish solids, or may contain a resin which does not depend on solvent evaporation in order to form a cured or set film. The binder thus may contain a catalyzed resin as the varnish solids. Examples of binders which may be used include the conventional phenolic, epoxy and alkyd varnishes, varnishes containing drying oils, such as tung oil and linseed oil, rubber and latex binders and the like. The binder may alternatively be of the water-soluble type, as for example, of the polyvinylpyrrolidone or polyvinylalcohol type. In addition to organic binders, inorganic binders may be used, such as sodium, silicate, boric acid, borax, magnesium or other soluble carbonates, nitrates, oxalates or oxychlorides, or colloidal suspensions containing oxides.

The coating of the core material with the binder containing the particles may be effected in any known or desired manner. It is simply necessary to mix the powdered ingredients together while allowing the binder to set and dry, which will result in a fairly free-flowing powder consisting of the core coated with the cladding of the aluminum, yttrium oxide and, optionally, molybdenum and/or cobalt.

In yet another form the core may itself be a composite of fine particles of the metals, nickel, iron, cobalt and/or chromium. For example, the core may be a composite of −10 μm nichel particles and 20% of −10 μm chromium particles, with −10 μm particles aluminum and yttrium oxide secured to te composite core. The core or the composite powder itself in accordance with the invention may be manufactured in any known or desired manner, for example, it may be produced with a spray drier as in US—A—3,617,358. However, the base constituent is preferably a structurally integral component so, for example, the thermal spray composite of the present invention desirably is not formed merely of fine particles of all ingredients including unalloyed chromium intermixed together with a binder.

The powders are sprayed in the conventional manner, using a powder-type thermal spray gun, though it is also possible to combine the same into the form of a composite wire or rod, using plastic or a similar binding, as for example, polyethylene or polyurethane, which decomposes in the heating zone of the gun.

A divisional application (European Patent Application No. 87.110 770.2 published as EP—A—0254324) is directed to a thermal spray wire comprising a thermal spray composite according to the present invention.

The spraying is in all respects effected in the conventional manner previously utilized for self-bonding thermal spray material, and in particular nickel-aluminum composites. Due to the self-bonding characteristics, special surface preparation other than good cleaning is not required, though, of course, conventional surface preparation such as grit blasting should be utilized to maximize tenacity of the coating to the substrate surface.

The thermal spray composite in accordance with the invention, as contrasted with prior known thermal spray materials, produces coatings that are not only self-bonding but also are highly resistant to high temperature oxidation and to oxidizing and reducing atmospheres containing molten or vaporized contaminants containing sodium, sulfur and chlorine such as are in fuels combusting in a marine evnironment. Additionally, and very surprisingly, the coatings are highly tenacious, typically having tensile bond strenths substantially greater than those of similar prior art composite coatings. Ductility is very good, as evidenced by lack of spalling in sharp angle bending. Coatings also have good machinability, rendering them useful for one-coat machine-element applications. The coatings produced from powders having nickel chromium alloy cores are especially resistant to oxidizing conditions with or without the sodium, sulfure and chlorine. The iron base powders are excellent in reducing conditions containing contaminants such as sodium sulfide and sodium chloride.

The powders containing molybdenum and/or cobalt have substantially the same and in some instances further improvements in corrosion resistance and tenacity, and additionally have an enhanced resistance to wear and impact. Cobalt as an additional constituent further improves tenacity and ductility of the coatings as evidenced, for example, by a substantial increase in allowable thickness of a coating before lifting from the substrate.

Typical applications are energy conversion devices; automotive and diesel combustion and turbine engines; aircraft and marine turbines; coal, oil, and fossil fueled boilers and power generation systems and components; bond coats for ceramic and metal coatings; and pulp and paper mill applications.

The following Examples are given by way of illustration.

## Example 1

41 parts by weight of fine aluminum powder of average size about 3.5 to 5.5 μm was blended with 9 parts by weight of fine yttrium oxide ($Y_2O_3$) powder of average size 2.5 μm. A polyvinylpyrolidone (PVP) binder solution containing 100 parts by volume of PVP, 100 parts of acetic acid and 700 parts of water was prepared separately. Approximately 40 ml of this solution was added to 400 g of nickel 20 percent chromium alloy core which had a mesh size of 44 to 111 μm (−140 to +325). This was mixed well. To this about 50 g of the blended aluminum and yttrium oxide mixture was slowly added and mixed thoroughly, and the mixing continued until the binder dried, leaving a fairly free-flowing powder in which all of the alloy core particles were clad with a dry film which contained the aluminum and yttrium oxide particles. The powder was warmed to about 121° (250°F) to ensure complete drying. The powder was then screened and hand-milled to reduce the same to a 44 to 121 μm (−120 to +325 mesh) powder. The powder so formed comprised particles of nickel-chromium alloy core with about 9 percent by weight of fine aluminum particles and 2 percent yttrium oxide particles secured to the core with the binder. The powder was thermal sprayed on a mild steel plate which had been surface cleaned by smooth grinding. The spraying was effected with a standard plasma flame gun of the general type described in US—A—3,145,287 and sold by METCO Inc., Westbury, New York, under the trademark METCO Type 7MB, using a GH nozzle with No. 2 powder port, and a powder feeder of the type described in US—A—3,501,097 and sold under the trademark METCO Type 3MP. Parameters were argon as primary plasma gas at 700 kPa (100 psi) pressure and 2.3 m³/h flow, hydrogen secondary plasma gas at 700 Kpa pressure and 0.6 m³/h flow; 500 A, 70V, carrier gas 0.42 m³/h, powder feed rate 3.6 kg/h, spray distance 14 cm. Excellent, well-bonded coatings were obtained. Coating hardness averages Rb 85.

5

## Example 2

The process of Example 1 is repeated except using as a core an alloy of iron and 30 percent by weight chromium in place of the nickel-chromium, and spray parameters were as follows: 707 nozzle, No. 6 powder port, nitrogen plasma gas at 350 kPa (50 psi) pressure and 21.1 m³/h flow, 600 A, 65 V, spray distance 10 to 15 cm. Similar results are obtained, with coating hardness about Rb 100.

## Example 3

The process of Example 1 is repeated except fine molybdenum powder of −5 µm (average about 2.5 µm) is included in the initial blend of aluminum and yttrium oxide in an amount equal to 3 parts by weight. The resulting powder comprises a core of nickel chromium alloy having about 9 percent by weight aluminum particles, 2 percent by weight yettrium oxide particles and 3 percent by weight molybdenum particles secured thereto. Results are similar.

## Example 4

The process of Example 1 is repeated except with the addition of the fine molybdenum of Example 3. The resulting powder comprises a core of iron chromium alloy having about 9 percent by weight aluminum particles, 2 percent by weight yttrium oxide particles and 3 percent by weight molybdenum particles secured thereto. Results are again similar.

## Example 5

The process of Example 1 is repeated except using a core of iron alloy containing 25 percent by weight chromium, 21 percent aluminum and 1 percent yttrium. Also the amounts of individual constituents of aluminum and yttrium oxide are adjusted to produce a powder having 8 percent aluminum and 2 percent yttrium oxide secured to the core with the binder. Coatings are sprayed as in Example 1. High quality, well-bonded coatings are obtained.

## Example 6

The powder made as described in Example 1 is thermal sprayed with the combustion-type powder spray gun as described in US—A—2,961,335 and sold by METCO Inc., Westbury, New York, under the trademark METCO Type 5P Thermospray gun. Spraying is effected with a P7G nozzle at a spray rate of 2.3 kg/h, using acetylene as fuel at 100 kPa (15 psi) and 0.96 m³/h, oxygen at 210 kPa (30 psi) and 0.96 m³/h, and spray distance of 18 cm. Excellent, well-bonded coatings are obtained.

## Example 7

The process of Example 1 is repeated except the amounts of individual constituents of aluminum and yttrium oxide were adjusted to produce a powder having 6 percent by weight aluminum and 2 percent yttrium oxide secured to the core with the binder. Another powder had 7.5 percent aluminum and 2 percent yttrium oxide secured to the core. Results are very similar to those of Example 1.

## Example 8

The process of Example 2 is repeated except with the amount of aluminum adjusted to form a powder having an iron aluminum alloy core and about 5 percent by weight aluminum and 2 percent yttrium oxide secured to the core. Excellent, well-bonded coatings are obtained.

## Example 9

The process of Example 1 is repeated except fine cobalt powder of −5 µm (average about 2.5 µm is included in the initial blend of aluminum and yttrium oxide in an amount equal to 4.5 parts by weight. The resulting powder comprises a core of nickel chromium alloy having about 9 percent by weight of aluminum particles, 2 percent by weight yttrium oxide particles and 4.5 percent by weight cobalt particles secured thereto. An alternative composition has about 8 percent by weight aluminum, 1 percent by weight yttrium oxide and 4 percent by weight cobalt. Excellent, strongly bonded coatings are obtained.

## Example 10

The process of Example 2 is repeated except fine cobalt powder of −5 µm (average about 2.5 µm is included in the initial blend of aluminum and yttrium oxide in an amount equal to 4.5 parts by weight. The resulting powder comprises a core of iron chromium alloy having about 9 percent by weight of aluminum particles, 2 percent by weight of yttrium oxide particles, and 4.5 percent by weight of cobalt particles secured thereto. Excellent, strongly bonded coatings are obtained.

Tests were carried out on selected coatings of the examples and known powders.

Tensile bond tests on mild steel prepared grinding or by rough grit blasting were done in accordance with ASTM Standard Model C633—69. Results are given in Table 1 for selected powders of these examples as well as for several known composite powders. The prior art composites reported in this and subsequent tables are in the form of alloy cores having specified constituents secured thereto with an organic binder.

6

## Table 1

### Tensile Bond Strength (average or typical)

| Powder Thermal Sprayed | Bond Strength (kPa) [psi] | |
|---|---|---|
| | Ground Surface | Grit Blast Surface |
| NiCr-9Al-2Y$_2$O$_3$ (Ex. 1) | 55373 [8025] | 86940 [12,600] |
| FeCr-9Al-2Y$_2$O$_3$ (Ex. 2) | 48990 [7100] | 73830 [10,700] |
| NiCr-6Al-2Y$_2$O$_3$ (Ex. 7) | 55890 [8100] | 84180 [12,200] |
| NiCr-9Al (Composite) | 29670 [4300] | 55200 [ 8,000] |
| NiCr-6Al (Composite) | 35190 [5100] | 55890 [ 8,100] |
| NiCr (Alloy) | 28980 [4200] | 53130 [ 7,700] |
| Ni-22Cr-10Al-1.0Y (Alloy) | Does not bond | 44160 [ 6,400] |
| FeCr-6Al-3Mo (Composite) | Does not bond | 54510 [·7,900] |

Oxidation resistance was determined as a percent weight gain measured on substrate-free coatings kept at 1100°C in a static air environment in a high temperature furnace after 30 hours of exposure. Results for various coatings including prior known composites and alloys are given in Table 2.

## Table 2

### Oxidation Resistance

| Powder Thermal Sprayed | Percent Weight Gain |
|---|---|
| Ni-22Cr-10Al-1.0Y (Alloy) | 1.7 |
| NiCr-9Al-2Y$_2$O$_3$ (Ex. 1) | 1.8 |
| NiCr-6Al-2Y$_2$O$_3$ (Ex. 7) | 2.2 |
| NiCr-6Al-3Mo (Composite) | 3.1 |
| NiCr-6Al (Composite) | 3.4 |
| NiCr (Alloy) | 5.2 |
| (Ni/16Cr/8Fe)-7Al-5Mo (Composite) | 6.0 |
| Ni-4.5Al (Composite) | 7.1 |

7

High temperature sulfidation tests in oxidizing atmosphere were done with molten salts, using industrial accepted procedures. A cold rolled steel pin of about 0.4 cm diameter and rounded ends was fully coated with the experimental coating. It was placed half immersed in a crucible containing a salt mixture of 90 percent by weight $Na_2SO_4$ and 10 percent NaCl. The crucible with the salt mixture and pin was kept in a high temperature furnace maintained at 750°C in static air environment. At this temperature the salt melts, and one half of the pin was exposed to molten salt and the other half of the coated pin ws exposed to corrosive vapor containing sodium, sulfur, chlorine and oxygen species. The test was run for varying lengths of time and stopped if visual degradation was observed. At the end of the test, the pins were removed, sectioned at both ends and examined metallographically. The results are given in Table 3.

## Table 3
### Sulfidation - Oxidation

| Powder Thermal Sprayed | Time to Degrade (Hours) | Mode of Attack |
|---|---|---|
| $NiCr-9Al-2Y_2O_3$ (Ex. 1) | 55 | No Attack |
| $FeCr-9Al-2Y_2O_3$ (Ex. 2) | 55 | No Attack |
| $NiCr-6Al-2Y_2O_3$ (Ex. 7) | 55 | No Attack |
| NiCr-6Al-3Mo (Composite) | 40 | Attack - Liquid Phase |
| NiCr-6Al (Composite) | 16 | Attack - Liquid Phase |
| NiCr (Alloy) | 16 | Attack - Liquid Phase |
| (Ni/16Cr/8Fe)-7Al-5Mo (Composite) | 8 | Attack - Liquid and Vapor Phase |
| Ni-4.5Al (Composite) | 8 | Attack - Liquid and Vapor Phase |

A standard industrial dry char test was used to simulate boiler corrosion conditions, which comprise a reducing atmosphere with certain contaminants. In this test, a fused solid was made by fusing together from 72—73 percent by weight $Na_2Co_3$, 17—18 percent $Na_2S$ and 10 percent of NaCl. This was crushed to a powder, and the coated steel pins were kept embedded in this powder in a dry condition at 455°C for 2 weeks (336 h). The pins in this condition were exposed to vapors of sodium, sulfur and chlorine compounds. At the end of the test, the pins were removed, lightly cleaned for scale removal, and weight loss determined. Also, they were sectioned and evaluated metallographically. Results are presented in Table 4.

## Table 4
### Dry Char Test

| Powder Thermal Sprayed | Weight Loss (mg) |
|---|---|
| $NiCr-9Al-2Y_2O_3$ (Ex. 1) | 14 |
| NiCr-6Al (Composite) | 45 |
| (Ni/16Cr/8Fe)-7Al-5Mo (Composite) | 120 |
| Ni-4.5Al (Composite) | 140 |

8

Thickness limitation tests were done on mild steel substrates (2.5 × 7.6 × 1,3 cm thick) prepared by surface grinding. Coatings were plasma sprayed up to thicknesses until visible signs of lifting were noticed. Results are given in Table 5 for selected powders of these examples as well as for several known composite powders.

## Table 5

### Thickness Limitation

| Powder Thermal Sprayed | Thickness (mm) |
|---|---|
| NiCr-9Al-4.5Co-2Y$_2$O$_3$ (Ex. 10) | More than 2.5 |
| NiCr-9Al-2Y$_2$O$_3$ (Ex. 1) | More than 1.5 |
| NiCr-6Al (Composite) | 1.0 |
| NiCr (Alloy) | Less than 0.5 |
| Ni-22Cr-10Al-1.0Y (Alloy) | Less than 0.5 |

**Claims**

1. A thermal spray composite for producing tenacious and corrosion resistant coatings, comprising alloy base constituent particles having particles of additional constituents adhering thereto, wherein its alloy base constituent comprises at least one base metal selected from nickel, iron, cobalt and chromium as the alloy balance and further additional optional alloying elements, and wherein its additional constituents comprise aluminum (metal) and yttrium oxide, the additional constituent aluminum being present in amount of about 1 to 15 percent by weight and the additional constituent yttrium oxide being present in an amount of about 0.5 to 10 percent by weight of the total of the base constituent and the additional constituents.

2. The thermal spray composite of claim 1, wherein the alloy base constituent comprises aluminum as an additional optional alloying element.

3. The thermal spray composite of claim 2, wherein the alloy base constituent further comprises at least one additional element selected from the group consisting of yttrium and rare earth metals.

4. The thermal spray composite of claim 1, wherein the additonal constituents further comprise one or more elements selected from molybdenum and cobalt.

5. The thermal spray composite of claim 1, wherein the additional constituents further comprise one or more elements selected from molybdenum and cobalt each in an amount of about 1 to 10 percent by weight of the total of the base constituent and the additional constituents.

6. The thermal spray composite of claim 1, wherein the composite is a powder between about −149 μm (−100 mesh) and +5 μm.

7. The thermal spray composite powder of claim 6, wherein the base constituent is in the form of a core and the additional constituents are each in the form of −10 μm particles secured to the core with a binder.

8. The thermal spray composite of claim 1, wherein the base constituent comprises chromium in an amount of about 1 to 55 percent by weight of the base constituent.

9. The thermal spray composite of claim 1, wherein the base constituent comprises aluminum in an amount of about 1 to 55 percent by weight of the base constituent.

10. The thermal spray composite of claim 1, wherein the base constituent comprises chromium and aluminum in a total amount of about 1 to 55 percent by weight of the base constituent.

11. The thermal spray composite of claim 8 or 9 or 10, wherein the additional constituents further comprise one or more elements selected from molybdenum and cobalt each in an amount of about 1 to 10 percent by weight of the total of the base constituent and the additional constituents.

12. The thermal spray composite of claim 7, wherein the core is an alloy comprising nickel and chromium.

13. The thermal spray composite of claim 7, wherein the core is an alloy comprising iron and chromium.

14. The thermal spray composite of claim 7, wherein the core is an alloy comprising iron and aluminum.

15. The thermal spray composite of claim 12 or 13 or 14, wherein the additional constituents further comprise −10 micron molybdenum particles which are secured to the alloy core with the organic binder and are present in an amount of about 1 to 10 percent by weight of the total of the alloy core and the additional constituents.

16. The thermal spray composite of claim 12 or 13 or 14, wherein the additional constituents further comprise −10 micron cobalt particles which are secured to the alloy core with the organic binder and are present in an amount of about 1 to 10 percent by weight of the total of the alloy core and the additional constituents.

17. The thermal spray composite of claim 14, wherein the aluminum present in the alloy core is in an amount of about 20 to 55 percent by weight.

18. A process for producing a tenacious and corrosion resistant coating comprising thermal spraying a thermal spray composite of alloy base constituent particles having additional constituent particles adhered thereto, wherein its alloy base constituent comprises at least one base metal selected from nickel, iron, cobalt and chromium as the alloy balance and further additional optional alloying elements, and wherein its additional constituents comprise aluminum (metal) and yttrium oxide, the additional constituent aluminum being present in amount of about 1 to 15 percent by weight and the additional constituent yttrium oxide being present in an amount of about 0.5 to 10 percent by weight of the total of the base constituent and the additional constituents.

19. The process of claim 18, wherein the base constituent further comprises aluminum.

20. The process of claim 18, wherein the composite is a powder between about −149 µm (−100 mesh) and +5 µm, the base constituent is in the form of a core and the additional constituents are each in the form of −10 µm particles secured to the core with a binder.

21. The process of claim 18, wherein the additional constituents further comprise one or more elements selected from the group consisting of molybdenum and cobalt.

22. The process of claim 18, wherein the composite is a powder between about −149 µm (−100 mesh) and +5 µm, the base constituent is in the form of a core of an alloy comprising nickel and chromium, the chromium is present in an amount of about 1 to 55 percent by weight of the alloy core, the additional constituents aluminum and yttrium oxide are in the form of −10 µm particles secured to the core with a binder, the additional constituent aluminum is present in an amount of about 1 to 15 percent and the additional constituent yttrium oxide is present in an amount of about 0.5 to 10 percent by weight of the total of the base constituents and the additional constituents.

23. The process of claim 18, wherein the composite is a powder between about −149 µm (−100 mesh) and +5 µm, the base constituent is in the form of a core of an alloy comprising iron and chromium, the chromium is present in an amount of about 1 to 55 percent by weight of the alloy core, the additional constituents aluminum and yttrium oxide are in the form of −10 µm particles secured to the core with a binder, the additional constituent aluminum is present in an amount of about 1 to 15 percent and the additional constituent yttrium oxide is present in an amount of about 0.5 to 10 percent by weight of the total of the base constituents and the additional constituents.

24. The process of claim 18, wherein the composite is a powder between about −149 µm (−100 mesh) and +5 µm, the base constituent is in the form of a core of an alloy comprising iron and aluminum, the aluminum is present in an amount of about 1 to 55 percent by weight of the alloy core, the additional constituents aluminum and yttrium oxide are in the form of −10 µm particles secured to the core with a binder, the additional constituent aluminum is present in an amount of about 1 to 15 percent and the additional constituent yttrium oxide is present in an amount of about 0.5 to 10 percent by weight of the total of the base constituents and the additional constituents.

25. The process of claim 22 or 23 or 24, wherein the additional constituents further comprise −10 µm molybdenum particles which are secured to the core with the binder and are present in an amount of about 1 to 10 percent by weight of the total of the base constituent and the additional constituents.

26. The process of claim 22 or 23 or 24, wherein the additional constituents further comprise −10 µm cobalt particles which are secured to the core with the binder and are present in an amount of about 1 to 10 percent by weight of the total of the alloy constituent and the additional constituents.

## Patentansprüche

1. Thermische Sprühzusammensetzung zur Herstellung von haftfesten und korrosionsbeständigen Überzügen, die Teilchen aus Legierungsgrundbestandteilen mit Teilchen weiterer Bestandteile, die daran haften, umfaßt, wobei der Legierungsgrundbestandteil wenigstens ein Grundmetall, gewählt aus Nickel, Eisen, Kobalt und Chrom als Legierungsrest und weiterhin zusätzliche wahlweise Legierungselemente umfaßt, und worin die zusätzlichen Bestandteile Aluminium (Metall) und Yttriumoxid umfassen, wobei der zusätzliche Bestandteil Aluminium in einer Menge von etwa 1 bis 15 Gew-% und der zusätzliche Bestandteil Yttriumoxid in einer Menge von etwa 0,5 bis 10 Gew.-%, bezogen auf das Gesamtgewicht des Chrombestandteils und der zusätzlichen Bestandteile, vorliegt.

2. Thermische Sprühzusammensetzung nach Anspruch 1, worin der Legierungsgrundbestandteil Aluminium als zusätzliches wahlweises Legierungselement umfaßt.

3. Thermische Sprühzusammensetzung nach Anspruch 2, worin der Legierungsgrundbestandteil weiterhin wenigstens ein zusätzliches Element, gewählt aus der Gruppe, bestehend aus Yttrium und Seltenerdenmetallen, umfaßt.

4. Thermische Sprühzusammensetzung nach Anspruch 1, worin die zusätzlichen Bestandteile weiterhin ein oder mehrere Elemente, gewählt aus Molybdän und Kobalt, umfassen.

5. Thermische Sprühzusammensetzung nach Anspruch 1, worin die zusätzlichen Bestandteile weiterhin ein oder mehrere Elemente, gewählt aus Molybdän und Kobalt, jeweils in einer Menge von etwa 1 bis 10 Gew.-% des Gesamtgewichts des Grundbestandteils und der zusätzlichen Bestandteile, umfassen.

6. Thermische Sprühzusammensetzung nach Anspruch 1, worin die Zusammensetzung ein Pulver zwischen etwa −149 µm (−100 mesh) und +5 µm ist.

7. Thermische Sprühzusammensetzung nach Anspruch 6, worin der Grundbestandteil in Form eines Kerns ist und die zusätzlichen Bestandteile jeweils in Form von −10 µm Teilchen, die an den Kern mit einem Bindemittel gebunden sind, sind.

8. Thermische Sprühzusammensetzung nach Anspruch 1, worin der Grundbestandteil Chrom in einer Menge von etwa 1 bis 55 Gew.-% des Grundbestandteils umfaßt.

9. Thermische Sprühzusammensetzung nach Anspruch 1, worin der Grundbestandteil Aluminium in einer Menge von etwa 1 bis 55 Gew.-% Grundbestandteils umfaßt.

10. Thermische Sprühzusammensetzung nach Anspruch 1, worin der Grundbestandteil Chrom und Aluminium in einer Gesamtmenge von etwa 1 bis 55 Gew.-% des Grundbestandteils umfaßt.

11. Thermische Sprühzusammensetzung nach Anspruch 8, 9 oder 10, worin die zusätzlichen Bestandteile weiterhin ein oder mehrere Elemente, gewählt aus Molybdän und Kobalt, jeweils in einer Menge von etwa 1 bis 10 Gew.-% des Gesamtgewichts des Grundbestandteils und der zusätzlichen Bestandteile, umfassen.

12. Thermische Sprühzusammensetzung nach Anspruch 7, worin der Kern eine Legierung, die Nickel und Chrom umfaßt, ist.

13. Thermische Sprühzusammensetzung nach Anspruch 7, worin der Kern eine Legierung, die Eisen und Chrom umfaßt, ist.

14. Thermische Sprühzusammensetzung nach Anspruch 7, worin der Kern eine Legierung, die Eisen und Aluminium umfaßt, ist.

15. Thermische Sprühzusammensetzung nach Anspruch 12, 13 oder 14, worin die zusätzlichen Bestandteile weiterhin −10 µm Molybdänteilchen umfassen, die an den Legierungskern mit dem organischen Bindemittel gebunden sind und in einer Menge von etwa 1 bis 10 Gew.-% des Gesamtgewichts des legierungskerns und der zusätzlichen Bestandteile vorliegen.

16. Thermische Sprühzusammensetzung nach Anspruch 12, 13 oder 14, worin die zusätzlichen Bestandteile weiterhin −10 µm Kobaltteilchen umfassen, die an den Legierungskern mit dem organischen bindemittel gebunden sind und in einer Menge von etwa 1 bis 10 Gew.-% der Gesamtmenge des Legierungskerns und der zusätzlichen Bestandteile vorliegen.

17. Thermische Sprühzusammensetzung nach Anspruch 14, worin das Aluminium in dem Legierungskern in einer Menge von etwa 20 bis 55 Gew.-% vorliegt.

18. Verfahren zur Herstellung eines haftfesten und korrosionsbeständigen Überzugs, bei dem eine thermische Sprühzusammensetzung aus Teilchen eines Legierungsgrundbestandteils mit Teilchen eines zusätzlichen Bestandteils, die daran haften, worin der Legierungsgrundbestandteil wenigstens ein Grundmetall, gewählt aus Nickel, Eisen, Kobalt und Chrom als Legierungsrest und weitere zusätzliche wahlweise Legierungselement, umfaßt, und worin die zusätzlichen Bestandteile Aluminium (Metall) und Yttriumoxid umfassen, wobei der zusätzliche Bestandteil Aluminium in einer Menge von etwa 1 bis 15 Gew.-% und der zusätzliche Bestandteil Yttriumoxid in einer Menge von etwa 0,5 bis 10 Gew.-%, bezogen auf das Gesamtgewicht des Grundbestandteils und der zusätzlichen Bestandteile, vorliegt, thermisch gesprüht wird.

19. Verfahren nach Anspruch 18, worin der grundbestandteil weiterhin Aluminium umfaßt.

20. Verfahren nach Anspruch 18, worin die Zusammensetzung ein Pulver zwischen etwa −149 µm (−100 mesh) und +5 µm ist, wobei der Grundbestandteil in Form eines Kerns ist und die zusätzlichen Bestandteile jeweils in Form von −10 µm Teilchen, die an den Kern mit einem Bindemittel gebunden sind, sind.

21. Verfahren nach Anspruch 18, worin die zusätzlichen Bestandteile weiterhin ein oder mehrere Elemente, gewählt aus der Gruppe, bestehend aus Molybdän und Kobalt, umfassen.

22. Verfahren nach Anspruch 18, worin die Zusammensetzung ein Pulver zwischen etwa −149 µm (−100 mesh) und +5 µm ist, wobei der Grundbestandteil in Form eines Kerns einer Legierung, umfassend Nickel und Chrom, ist, wobei das Chrom in einer Menge von etwa 1 bis 55 Gew.-% des Legierungskerns vorliegt, die zusätzlichen Bestandteile Aluminium und Yttriumoxid in Form von −10 µm Teilchen, die an den Kern mit einem Bindemittel gebunden sind, sind, wobei der zusätzliche Bestandteil Aluminium in einer Menge von etwa 1 bis 15% und der zusätzliche Bestandteil Yttriumoxid in einer Menge von etwa 0,5 bis 10 Gew.-%, bezogen auf das Gesamtgewicht der Grundbestandteile und der zusätzlichen Bestandteile, vorliegt.

23. Verfahren nach Anspruch 18, worin die Zusammenzetzung ein Pulver zwischen etwa −149 µm (−100 mesh) und +5 µm ist, wobei der Grundbestandteil in Form eines Kerns einer Legierung, umfassend Eisen und Chrom, ist, wobei das Chrom in einer Menge von etwa 1 bis 55 Gew.-% des Legierungskerns vorliegt, die zusätzlichen Bestandteile Aluminium und Yttriumoxid in Form von −10 µm Teilchen, die an den Kern mit einem Bindemittel gebunden sind, wobei der zusätzliche Bestandteil Aluminium in einer Menge von etwa 1 bis 15% und der zusätzliche Bestandteil Yttriumoxid in einer Menge von etwa 0,5 bis 10 Gew.-%, bezogen auf das Gesamtgewicht der Grundbestandteile und der zusätzlichen Bestandteile, vorliegt.

24. Verfahren nach Anspruch 18, worin die Zusammensetzung ein Pulver zwischen etwa −149 µm (−100 mesh) und +5 µm ist, wobei der Grundbestandteil in Form eines Kerns einer Legierung, die Eisen und Aluminium umfaßt, ist, wobei das Aluminium in einer Menge von etwa 1 bis 55 Gew.-% des Legierungskerns vorliegt, die zusätzlichen Bestandteile Aluminium und Yttriumoxid in Form von −10 µm Teilchen, die an den Kern mit einem Bindemittel gebunden sind, sind, wobei der zusätzliche Bestandteil Aluminium in einer Menge von etwa 1 bis 15% und der zusätzliche Bestandteil Yttriumoxid in einer Menge von etwa 0,5 bis 10 Gew.-% bezogen auf das Gesamtgewicht der Grundbestandteile und der zusätzlichen Bestandteile, vorliegt.

25. Verfahren nach Anspruch 22, 23 oder 24, worin die zusätzlichen Bestandteile weiterhin −10 µm Molybdänteilchen umfassen, die an den Kern mit dem Bindemittel gebunden sind und in einer Menge von etwa 1 bis 10 Gew.-% des Gesamtgewichts des Grundbestandteils und der zusätzlichen Bestandteile vorliegen.

26. Verfahren nach Anspruch 22, 23 oder 24, worin die zusätzlichen Bestandteile weiterhin −10 µm Kobaltteilchen umfassen, die an den Kern mit dem Bindemittel gebunden sind und in einer Menge von etwa 1 bis 10 Gew.-% des Gesamtgewichts des Legierungsbestandteils und der zusätzlichen Bestandteile vorliegen.

## Revendications

1. Composite pour pulvérisation thermique pour produire des revêtements tenaces et résistant à la corrosion, comprenant des particules de constituant d'alliage de base sur lesquels sont collées des particules de constituant supplémentaire, dans lequel son constituant de l'alliage de base comprend au moins un métal de base choisi parmi le nickel, le fer, le cobalt et le chrome comme reste de l'alliage et d'autres éléments d'alliage supplémentaire facultatif, et dans lequel ses constituants supplémentaires comprennent de l'aluminium (métallique) et de l'oxyde d'yttrium, le constituant supplémentaire aluminium étant présent dans une quantité d'environ 1 à 15% en poids et le constituant supplémentaire oxyde d'yttrium étant présent dans une quantité d'environ 0,5 à 10% en poids du total du constituant de base et des constituants supplémentaires.

2. Composite pour pulvérisation thermique de la revendication 1, dans lequel les constituant de base de l'alliage comprend de l'aluminium comme élément d'alliage facultatif supplémentaire.

3. Composite pour pulvérisation thermique de la revendication 2, dans lequel les constituant de base de l'alliage comprend en outre au moins un élément supplémentaire choisi dans le groupe constitué de l'yttrium et des métaux des terres rares.

4. Composite pour pulvérisation thermique de la revendication 1, dans lequel les constituants supplémentaires comprennent en outre un ou plusieurs éléments choisis parmi le molybdène et le cobalt.

5. Composite pour pulvérisation thermique de la revendication 1, dans lequel les constituants supplémentaires comprennent en outre un ou plusieurs éléments choisis parmi le molybdène et le cobalt, chacun dans une quantité d'environ 1 à 10% en poids du total du constituant de base et des constituants supplémentaires.

6. Composite de pulvérisation thermique de la revendication 1, dans lequel le composite est une poudre entre environ −149 µm et +5 µm.

7. Poudre composite pour pulvérisation thermique de la revendication 6, dans laquelle le constituant de base est sous la forme d'un noyau et les constituants supplémentaires sont chacun sous la forme de particules de −10 µm fixées sur le noyau avec un liant.

8. Composite pour pulvérisation thermique de la revendication 1, dans lequel le constituant de base comprend du chrome dans une quantité d'environ 1 à 55% en poids du constituant de base.

9. Composite pour pulvérisation thermique de la revendication 1, dans lequel le constituant de base comprend de l'aluminium dans une quantité d'environ 1 à 55% en poids du constituant de base.

10. Composite pour pulvérisation thermique de la revendication 1, dans lequel le constituant de base comprend du chorme et de l'aluminium dans une quantité totale d'environ 1 à 55% en poids du constituant de base.

11. Composite pour pulvérisation thermique des revendications 8 ou 9 ou 10, dans lequel les constituants supplémentaires comprennent en outre un ou plusieurs éléments choisis parmi le molybdène et le cobalt, chacun dans une quantité d'environ 1 à 10% du total du constituant de base et des constituants supplémentaires.

12. Composite pour pulvérisation thermique de la revendication 7, dans lequel le noyau est un alliage comprenant du nickel et du chrome.

13. Composite pour pulvérisation thermique de la revendication 7, dans lequel le noyau est un alliage comprenant du fer et du chrome.

12

# EP 0 157 231 B1

14. Composite pour pulvérisation thermique de la revendication 7, dans lequel le noyau est un alliage comprenant du fer et de l'aluminium.

15. Composite pour pulvérisation thermique de la revendication 12 ou 13 ou 14, dans lequel les constituants supplémentaires comprennent en outre des particules de molybdène de $-10\ \mu m$ qui sont fixées sur le noyau de l'alliage avec le liant organique et sont présentes dans une quantité d'environ 1 à 10% en poids du total du noyau de l'alliage et des constituants supplémentaires.

16. Composite pour pulvérisation thermique des revendications 12 ou 13 ou 14, dans lequel les constituants supplémentaires comprennent en outre des particules de cobalt de $-10\ \mu m$ qui sont fixées sur le noyau de l'alliage avec le liant organique et sont présentes dans une quantité d'environ 1 à 10% en poids du total du noyau de l'alliage et des constituants supplémentaires.

17. Composite pour pulvérisation thermique de la revendication 14, dans lequel l'aluminium présent dans le noyau de l'alliage est dans une quantité d'environ 20 à 55% en poids.

18. Procédé de production d'un revêtement tanace et résistant à la corrosion comprenant la pulvérisation thermique d'un composite pour pulvérisation thermique de particules de constituant d'une base d'alliage sur laquelle sont collées des particules de constituant supplémentaire, dans lequel son constituant de base de l'alliage comprend au moins un métal de base choisi parmi le nickel, le fer, le cobalt et le chrome comme reste de l'alliage et en outre des éléments d'alliage facultatif supplémentaire, et dans lequel ces éléments supplémentaires comprennent de l'aluminium (métallique) et de l'oxyde d'yttrium, le constituant supplémentaire d'aluminium étant présent dans une quantité d'environ 1 à 15% en poids et le constituant supplémentaire d'oxyde d'yttrium étant présent dans une quantité d'environ 0,5 à 10% en poids du total du constituant de base et des constituants supplémentaires.

19. Procédé de la revendication 18, dans lequel le constituant de base comprend en outre de l'aluminium.

20. Procédé de la revendication 18, dans lequel le composite est une poudre entre environ $-149\ \mu m$ et $+5\ \mu m$, le constituant de base est sous la forme d'un noyau et les constituants supplémentaires sont chacun sous la forme de particules de $-10\ \mu m$ fixées sur la noyau avec un liant.

21. Procédé de la revendication 18, dans lequel les constituants supplémentaires comprennent en outre un ou plusieurs éléments choisis dans le groupe constitué du molybdène et du cobalt.

22. Procédé de la revendication 18, dans lequel le composite est une poudre entre environ $-149\ \mu m$ et $+5\ \mu m$, le constituant de base est sous la forme d'un noyau d'un alliage comprenant du nickel et du chrome, le chrome est présent dans une quantité d'environ 1 à 55% en poids du noyau d'alliage, les constituants supplémentaires aluminium et oxyde d'yttrium sont sous la forme de particules de $-10\ \mu m$ fixées sur le noyau avec un liant, le constituant supplémentaire d'aluminium est présent dans une quantité d'environ 1 à 15% et le constituant supplémentaire d'oxyde d'yttrium est présent dans une quantité d'environ 0,5 à 10% en poids du total des constituants de base et des constituants supplémentaires.

23. Procédé de la revendication 18, dans lequel le composite est une poudre entre environ $-149\ \mu m$ et $+5\ \mu m$, le constituant de base est sous la forme d'un noyau d'un alliage comprenant du fer et du chrome, le chrome est présent dans une quantité d'environ 1 à 55% en poids du noyau d'alliage, les constituants supplémentaires aluminium et oxyde d'yttrium son sous la forme de particules de $-10\ \mu m$ fixées sur le noyau avec un liant, le constituant supplémentaire aluminium est présent dans une quantité d'environ 1 à 15% et le constituant supplémentaire oxyde d'yttrium est présent dans une quantité d'environ 0,5 à 10% en poids du total des constituants de base et des constituants supplémentaires.

24. Procédé de la revendication 18, dans lequel le composite est une poudre entre environ $-149\ \mu m$ et $+5\ \mu m$, le constituant de base est sous la forme d'un noyau d'un alliage comrenant du fer et de l'aluminium, l'aluminium est présent dans une quantité d'environ 1 à 55% en poids du noyau d'alliage, les constituants supplémentaires aluminium et oxyde d'yttrium sont sous la forme de particules de $-10\ \mu m$ fixées sur le noyau avec un liant, le constituant supplémentaire d'aluminium est présent dans une quantité d'environ 1 à 15% et le constituant supplémentaire oxyde d'yttrium est présent dans une quantité d'environ 0,5 à 10% en poids du total des constituants de base et des constituants supplémentaires.

25. Procédé de la revendications 22 ou 23 ou 24, dans lequel les constituants supplémentaires comprennent en outre des particules de molybdène de $-10\ \mu m$ qui sont fixées sur le noyau avec le liant et sont présentes dans une quantité d'environ 1 à 10% en poids du total de constituant de base et des constituants supplémentaires.

26. Procédé de la revendications 22 ou 23 ou 24, dans lequel les constituants supplémentaires comprennent en outre des particules de cobalt de $-10\ \mu m$ qui sont fixées sur le noyau avec le liant et sont présentes dans une quantité d'environ 1 à 10% en poids du total du constituant d'alliage et des constituants supplémentaires.

13